# EUROPEAN PATENT SPECIFICATION

(11) **EP 0 828 066 B1**
(45) Date of publication and mention of the grant of the patent: **02.01.2002**
(21) Application number: 97115474.5
(22) Date of filing: 05.09.1997
(51) Int. Cl.: F02B 23/06

(54) **Combustion chamber of diesel engine**
Brennkammer einer Dieselbrennkraftmaschine
Chambre de combustion d'un moteur diesel

(30) Priority: 06.09.1996 JP 25741796
(43) Date of publication of application: 11.03.1998
(73) Proprietor: MITSUBISHI JIDOSHA KOGYO KABUSHIKI KAISHA, Tokyo 108 (JP)
(72) Inventor: Ohashi, Tomohiro, Minato-ku, Tokyo (JP); Sato, Atsuo, Minato-ku, Tokyo (JP); Watanabe, Tetsuya, Minato-ku, Tokyo (JP)
(74) Representative: Sajda, Wolf E., Dipl.-Phys.

(56) References cited:
- EP-A- 0 295 520
- EP-A- 0 656 466
- DE-B- 1 226 824
- DE-C- 3 245 780
- US-A- 4 177 769
- US-A- 4 721 080
- US-A- 5 158 055
- PATENT ABSTRACTS OF JAPAN vol. 096, no. 006, 28 June 1996 & JP 08 049545 A (MITSUBISHI HEAVY IND LTD), 20 February 1996,
- PATENT ABSTRACTS OF JAPAN vol. 013, no. 340 (M-857), 31 July 1989 & JP 01 116219 A (MAZDA MOTOR CORP), 9 May 1989,
- PATENT ABSTRACTS OF JAPAN vol. 009, no. 128 (M-384), 4 June 1985 & JP 60 011624 A (ISUZU JIDOSHA KK), 21 January 1985,

## Description

The present invention relates to a combustion chamber formed in the top portion of a piston of a diesel engine, and more particularly, to a combustion chamber used effectively to improve fuel combustion performance.

In general, a diesel engine is basically designed so that fuel droplets injected into a combustion chamber and air are uniformly mixed to improve the utilization of air against the fuel, thereby increasing the thermal efficiency, and that combustion control is carried out to restrict mechanical and thermal loads within given limits. Further, the concentration of exhaust gas, quantities of discharged substances, noise level, etc. are expected to be reduced or lowered. Conventionally, direct-injection diesel engines have been used as power sources for various applications and large-sized vehicular engines. In the diesel engines of this type, the mixture of fuel droplets and air depends on airflows, such as a swirl of air introduced through an intake passage and squishes produced according to the shape of a combustion chamber that is formed in the top portion of a piston. In the diesel engines of this type, since the energy of the airflows is relatively small, the rate of fuel injection, spray pattern, spray particle diameter, etc. must be optimized in order to accelerate the mixture of the fuel droplets and air.

Accordingly, the inventor hereof proposed a direct-injection diesel engine in which a fuel spray is caused to run against a ridge that is formed on a side wall surface of a combustion chamber, whereby the mixture of air and fuel droplets is accelerated. More specifically, as described in Jpn. Pat. Appln. KOKAI Publication No. 60-173310, a combustion chamber of the so-called reentrant-cavity type is formed in the top portion of a piston in a manner such that it opens in the top surface of the piston and spreads toward the inner part of the piston, and a ring-shaped ridge is formed on the middle portion of the combustion chamber so as to extend in the circumferential direction of the chamber. In this prior art example, the fuel spray ejected from a fuel injection nozzle is caused to run against and be reflected by various surface portions of the ridge, depending on the relative position of the piston in its axial direction, whereby the fuel spray in the combustion chamber is distributed in various layers. The fuel and air are mixed satisfactorily by the multilayer distribution of the fuel spray and by means of a swirl of intake air formed in the combustion chamber. Thus, the combustion characteristics of the fuel can be improved.

According to the direct-injection diesel engine described in Jpn. Pat. Appln. KOKAI Publication No. 60-173310, the air utilization is improved by distributing the fuel spray reflected by the ridge in layers in the combustion chamber. In this engine, moreover, the reentrant-cavity combustion chamber serves to restrain flames from being blown off toward a cylinder wall (so-called quenching zone) whose temperature is relatively low even after ignition and combustion, thereby reducing the amount of exhaust gas and improving the output power. According to the technique described in the aforesaid publication, however, airflows are not utilized satisfactorily for the mixture of air and fuel droplets. In order to obtain an optimum combustion state in a wide engine revolution speed range or reduce the exhaust gas amount, the airflows are expected to be utilized more effectively.

Moreover, a direct-injection diesel engine is described in Japanese Patent Application KOKAI Publication No. 4-272425, in which a side wall of a combustion chamber is provided with an air sub-chamber in the form of a groove that extends in the axial direction of a piston. Since the air sub-chamber extends along the side wall surface of the combustion chamber and opens in the top surface of the piston, however, a fuel spray injected into the combustion chamber and combustion gas therein are liable to flow out into a space in a cylinder from the combustion chamber through the air sub-chamber. In some cases, therefore, the deliveries of unburned components increase, or the air in the combustion chamber cannot be utilized effectively.

The document JP-8049545 discloses a diesel engine having a combustion chamber of the reentrant-cavity type formed in the top portion of the piston according to the first and third paragraph of claim 1 wherein the combustion chamber comprises a plurality of depressions formed in the side wall surface, each depression being formed to surround a center of a fuel impact portion receiving a fuel spray injected from the fuel injection nozzle.

The document JP-60011624 discloses a diesel engine having a combustion chamber of the reentrant-cavity type according to the first and third paragraph of claim 1. In this engine, the combustion chamber comprises a plurality of depressions formed in the upper surface of the piston, each depression being formed above a fuel impact portion receiving a fuel spray injected from the fuel injection nozzle, and each depression being slightly offset to the downstream side with respect to the vertical projection of the fuel impact portion.

Accordingly, the object of the present invention is to provide a combustion chamber formed in the top portion of a piston of a diesel engine, in which fuel combustion performan ce is improved by mixing a fuel and intake air more satisfactorily than in the afore-mentioned prior art combustion chambers.

In order to achieve the above object of the invention, there is provided a combustion chamber of a diesel engine, which includes an intake passage communicated with a cylinder of the engine through an intake valve and serving to generate a swirl in the cylinder, an exhaust passage communicated with the cylinder through an exhaust valve, a piston slidably disposed in the cylinder head of the engine so that a fuel is injected directly into the cylinder an used to inject a fuel in association with compression stroke of the piston. The combustion chamber is of the reentrant-cavity type formed in the top portion of the piston and having a shape such that a side wall surface of the combustion chamber spreads toward the inner part of the piston. The combustion chamber is characterized by comprising a depression formed in the side wall surface, an edge of the depression on the side of a top surface of the piston being situated in the combustion chamber, the depression being formed on the downstream side of a fuel impact portion with respect to the swirl, the fuel impact portion receiving a fuel spray ejected from the fuel injection nozzle and running against the same.

According to this arrangement, the swirl generated in the cylinder in the intake stroke of the piston is kept confined in the combustion chamber of the piston ascending at the last stage of its compression stroke. The fuel is injected from the fuel injection nozzle into the combustion chamber at and after the last stage of the compression stage. In the first term of combustion, the fuel injected toward the side wall surface of the combustion chamber runs against the fuel impact portion of the side wall surface and is reflected thereby, whereupon it is mixed with air by means of the swirl. Thereafter, the fuel spray is carried by the swirl along the side wall surface of the combustion chamber to the downstream side of the swirl in the circumferential direction of the combustion chamber. As the swirl flow along the side wall surface, a turbulence is produced on the downstream side of the depression in the side wall surface, whereby the mixture of the fuel and air is accelerated. Since the depression also causes a current that separates from the side wall surface, adhesion of the run fuel to the side wall surface and the inner surface of the depression can be reduced. As a result, the fuel and air can be mixed efficiently, so that the utilization of air can be improved. Depending on the operating conditions of the engine, the injected fuel starts locally to be burned before or after it runs against the side wall surface. The resulting local combustion gas and unburned gas mixtures of the subsequently injected fuel and air are successively mixed and burned, whereupon combustion spreads throughout the interior of the combustion chamber.

Since the piston starts to descends when it shifts to its expansion stroke in the second term of combustion, the swirl flowing in the combustion chamber is not strong. A turbulence is also produced when an outward airflow (so-called reverse squish) from the inside of the combustion chamber passes the depression along the side wall surface as the piston descends. This turbulence helps remixing of the unburned gas and air. This combustion chamber is of the reentrant-cavity type, and the depression is formed entire in the side wall surface of the combustion chamber without extending to the top surface of the piston. Accordingly, the unburned gas in the combustion chamber can be restrained from flowing out of the combustion chamber. Thus, the unburned gas is confined to the utmost in the combustion chamber so that the air remaining in the combustion chamber can be utilized effectively.

Thus, in the first term of combustion, the mixture of the fuel and air is accelerated by the swirl and the turbulence that is produced by the depression and the swirl. In the second term of combustion, on the other hand, the mixture of the fuel and air is accelerated by the turbulence that is produced by the depression and the reverse squish. Accordingly, the fuel can be burned satisfactorily in a relatively short time when the piston is situated near its top dead center. As a result, the engine output power can be enhanced, the fuel consumption can be improved, and the deliveries of NOx (nitrogen oxides) and HC (hydrocarbon) can be reduced. Since the unburned gas is restrained from flowing out of the combustion chamber, moreover, the amount of HC in exhaust gas can be reduced, and besides, the production of soot can be restrained by effectively utilizing the air in the combustion chamber.

According to the invention, the combustion chamber may further comprise a ridge formed on the fuel impact portion of the side wall surface and adapted to change the direction of reflection of the impacting fuel spray in accordance with the relative position of the piston in the axial direction thereof. As the piston moves in its axial direction, in this case, the position where the fuel ejected from the fuel injection nozzle runs against the fuel impact portion changes. Thus, the fuel having run against the fuel impact portion is reflected so as to be distributed in layers in the axial direction of the combustion chamber, whereby the mixture of the fuel and air can be improved further.

According to the invention, moreover, the ridge may be situated substantially on the middle portion of the side wall surface in the axial direction thereof and extend covering the whole circumference of the combustion chamber in a manner such that the depression overlaps part of the ridge. Since the depression is formed so as to overlap part of the ridge, in this case, the length of the peripheral edge of the depression in the flowing direction of the swirl is longer than in the case where the combustion chamber is not provided with the ridge, so that the area for the production of turbulences is widened. Thus, the mixture of the fuel and air can be accelerated additionally.

According to the invention, moreover, the fuel injection nozzle may be located in the cylinder head so as to be situated in the central portion of the combustion chamber, and may have a plurality of jets from which the fuel is ejected radially toward the side wall surface of the combustion chamber. Furthermore, the depressions may be formed corresponding in number to the fuel sprays ejected individually from the jets.

According to the invention, the depression may have a shape such that its depth gradually decreases toward the downstream side of the swirl. In this arrangement, the unburned air-fuel mixture and the like in the depression can be easily forced out of the depression by the swirl, thus ensuring better combustion. According to the invention, moreover, the combustion chamber may further comprise a conical projection protruding from the bottom of the combustion chamber and projecting toward the fuel injection nozzle.

The invention can be more fully understood from the following detailed description when taken in conjunction with the accompanying drawings, in which:
FIG. 1 is a plan view of a piston showing a combustion chamber according to an embodiment of the present invention and fuel sprays;
FIG. 2 is a sectional view of the piston taken along line II-II of FIG. 1;
FIG. 3 is a diagram showing relations between the heat generation rate and the crank angle of a diesel engine furnished with the combustion chamber according to the embodiment;
FIG. 4 is a cross-sectional view showing part of a piston according to another embodiment of the invention; and
FIG. 5 is a sectional view showing part of a diesel engine furnished with the combustion chamber shown in FIG. 1.

An embodiment of the present invention will now be described with reference to the accompanying drawings.

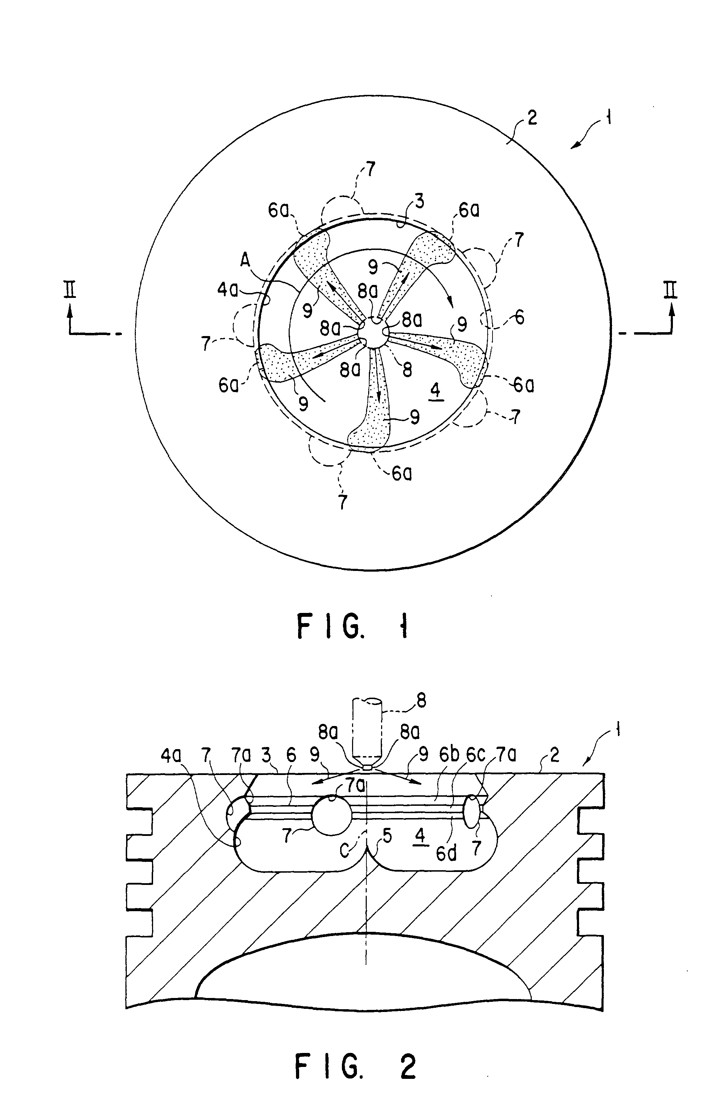

A piston 1 of a diesel engine shown in FIGS. 1 and 2 is provided with a combustion chamber 4 of the reentrant-cavity type formed in its top portion. The chamber 4 opens in a flat top surface 2 of the piston 1. The reentrant-cavity combustion chamber 4 has a shape such that it spreads from its open end 3 toward the inner part of the piston. A conical projection 5 protrudes from the center of the bottom of the chamber 4 and projects toward a fuel injection nozzle 8 (mentioned later).

A ridge 6 is formed on a side wall surface 4a of the combustion chamber 4, projecting toward the central portion of the chamber 4 in the radial direction, in a substantially middle position with respect to the direction of an axis C of the piston 1. The ridge 6 is in the form of a ring that extends continuously in the circumferential direction of the chamber 4. The side wall surface 4a is formed having five depressions 7 with a spherical inner surface, which are arranged at regular intervals in the circumferential direction of the combustion chamber 4. Each depression 7 partially overlaps the ridge 6.

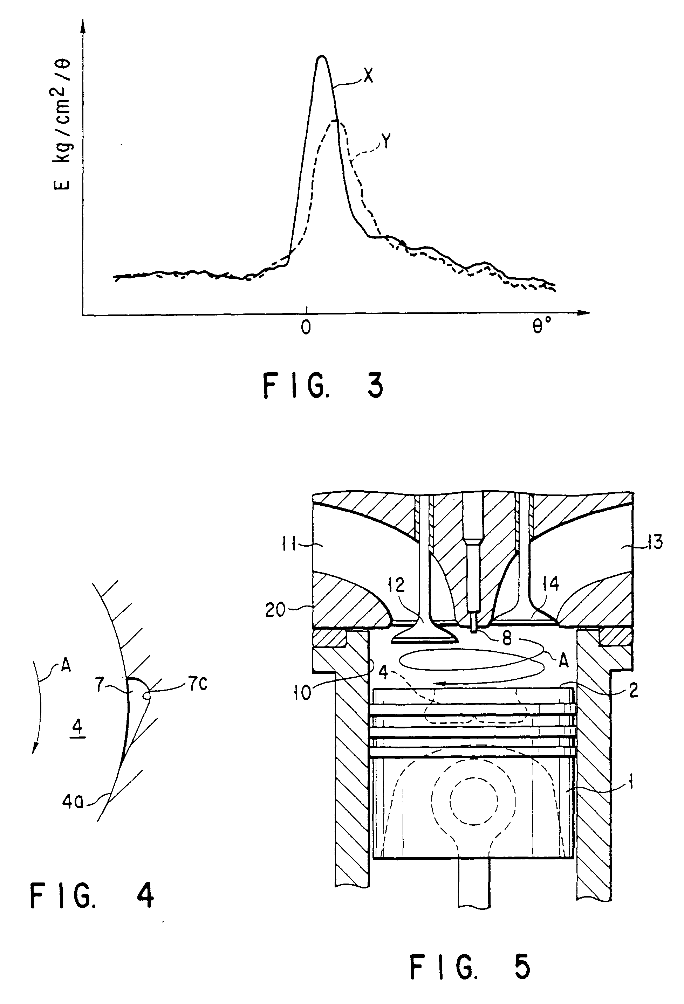

As shown in FIG. 5, the piston 1 is slidably located in a cylinder 10. When the piston 1 is in its intake stroke, a swirl A of intake air is generated in the cylinder 10 through an intake passage 11. An intake valve 12 is provided at the end of the intake passage 11 which is connected to the cylinder 10. An exhaust valve 14 is provided at the end of an exhaust passage 13 which is connected to the cylinder 10. The swirl A is kept confined in the combustion chamber 4 of the piston 1 at the last stage of the compression stroke of the piston 1. Thus, at the last stage of the compression stroke of the piston 1, a fuel injected from the fuel injection nozzle 8 forms a plurality of fuel sprays 9. The nozzle 8 is provided with five jets 8a, for example. The nozzle 8 jets out the fuel sprays 9 radially in five equiangular circumferential directions of the combustion chamber 4, as indicated by arrows in FIG. 1, toward those surface regions (fuel impact portions 6a) of the ridge 6 on the side wall surface 4a which are not formed with the depressions 7. The fuel injection nozzle 8 is provided in a cylinder head 20 (shown in FIG. 5) so as to be situated in the central portion of the combustion chamber 4.

As the piston 1 ascends in its compression stroke, therefore, the fuel sprays 9 ejected toward the ridge 6 run against the side wall surface 4a and surfaces 6b, 6c and 6d of the ridge 6 in succession. After this is done, the fuel sprays 9 can be mixed fully with intake air in the combustion chamber 4 by being reflected in various directions in the chamber 4 by the surfaces 4a, 6b, 6c and 6d. Since the intake swirl A is generated in the combustion chamber 4, moreover, the fuel sprays 9 can be mixed with the intake air also by means of the swirl A. When the swirl A moves facing on the depressions 7, it is separated from the surface of the ridge 6 and disturbed substantially, whereupon separated currents are produced. Accordingly, the mixture of the intake air and the fuel sprays 9 carried in the circumferential direction of the combustion chamber 4 by the swirl A is accelerated by the separated currents. Also, the fuel sprays 9 that are brought close to each depression 7 by the swirl A can be separated from the surface of the ridge 6 and mixed with intake air in the depression 7.

As the piston 1 moves in the direction of its axis C, therefore, the fuel sprays 9 ejected toward the vicinity of the ridge 6 of the combustion chamber 4 run against the side wall surface 4a and the surfaces 6b, 6c and 6d of the ridge 6, and are reflected thereby in various layers and mixed with air by means of the swirl A. Further, the mixture of air and the fuel sprays 9 carried by the swirl A to the downstream side of the combustion chamber 4 in the circumferential direction of the chamber 4 is accelerated by a turbulence produced on the downstream side of each depression 7. Since the depressions 7 also produce currents that separate from the side wall surface 4a, adhesion of the run fuel to the wall surface 4a and the inner surface of each depression 7 can be reduced. As a result, the fuel and air can be mixed efficiently, so that the utilization of air can be improved. When the piston 1 descends, moreover, a turbulence that is produced as reverse squishes (outward airflows from the inside of the combustion chamber 4) move along the side wall surface 4a and past the depressions 7 helps remixing of an unburned gas and air. Accordingly, the fuel can be burned satisfactorily in a relatively short time when the piston 1 is situated near its top dead center with the combustion chamber 4 at high temperature. Thus, the engine output can be enhanced, and the fuel consumption can be improved.

Since the combustion chamber 4 has the conical projection 5 protruding from its bottom, air in the central portion of the chamber 4, which is located in the center of the swirl A and flows so gently that its utilization is liable to be lowered, can be also distributed to the outer peripheral portion of the chamber 4. Thus, the air utilization can be improved further.

FIG. 3 shows a heat generation rate E compared to a crank angle θ obtained when the diesel engine is in idle operation. In FIG. 3, full-line curve X represents the case of the diesel engine having the piston 1 with the depressions 7, while broken-line curve Y represents the case of a diesel engine having a piston without the depressions 7. Curve X, compared to curve Y, indicates that the fuel burns well in a relatively short time from the beginning and ensures a high heat release value for that time, so that the engine output is enhanced.

As the fuel sprays 9 and the intake air are mixed fully in the combustion chamber 4, as mentioned before, fuel combustion performance can be improved considerably, so that production of cinders or soot can be reduced. Accordingly, the amount of EGR (exhaust gas recirculation) gas in an EGR system, for example, can be increased to a relatively high level, so that the production of NOx can be reduced with ease.

In the combustion chamber 4, there are no depressions 7 in the surface regions (fuel impact portions) 6a of the ridge 6 against which the fuel sprays 9 ejected from the fuel injection nozzle 8 run. Therefore, the surface area of the ridge 6 in each surface region 6a cannot be too wide, so that the temperature of the fuel sprays 9, having run against the ridge 6, can be restrained from lowering. Since each depression 7 in the ridge 6 is smaller enough than the combustion chamber 4 itself, the formation of the depressions 7 never makes the surface area of the side wall surface 4a of the chamber 4 too wide. Accordingly, the temperature of the fuel sprays 9 that flow along the side wall surface 4a of the combustion chamber can be restrained from lowering, so that an increase of the amount of HC in exhaust gas as an unburned component can be also restrained without the possibility of lowering the ignitability of the fuel.

The depressions 7 in the ridge 6 are separated inward from the open end 3 of the combustion chamber 4 with respect to the piston 1. Thus, an edge 7a of each depression 7 on the side of the piston top surface 2 is situated short of the open end 3. Accordingly, the fuel sprays 9 injected into the combustion chamber 4 and combustion gas generated in the chamber 4 are restrained from flowing out from the chamber 4 into the cylinder 10 via the depressions 7. This facilitates confinement of the fuel sprays 9 and the combustion gas into the combustion chamber 4, so that an increase of the amount of HC in the exhaust gas, which is attributable to the delivery of the unburned component, can be prevented. Since the air in the combustion chamber 4 can be utilized effectively, moreover, the production of soot can be reduced, and the combustion characteristics of the fuel in the chamber 4 can be maintained satisfactorily.

Since the capacity of each depression 7 in the ridge 6 is smaller enough than that of the combustion chamber 4, the depressions 7 cannot cause any practical change in the compression ratio of the chamber 4. Thus, existing pistons can be provided with the depressions 7 without any problem.

Although the inner surface of each depression 7 thus formed in the ridge 6 is a spherical surface according to the embodiment described above, it may alternatively be a curved surface having an elliptic section or the like or a polygonal surface. The same functions and effects of the foregoing embodiment can be obtained by forming depressions of any shape that can separate an intake swirl in the combustion chamber from the side wall surface of the combustion chamber. FIG. 4 shows a modified depression 7, which gradually becomes shallower from its deepest portion 7c toward the downstream side of the intake swirl A.

The same functions and effects of the foregoing embodiments can be obtained by forming depressions in the following positions in consideration of squishes (inward airflows from the outside of the combustion chamber 4) in the reentrant-cavity combustion chamber 4 that are produced when the piston 1 is in the compression stroke. The depressions are situated in positions that are deviated from the fuel impact portions 6a against which the fuel sprays 9 run on the side wall surface 4a in the circumferential direction of the piston 1 and shifted in the direction of the axis C of the piston 1. Further, these depressions are formed so as not to extend to the open end 3 of the piston top surface 2. Part of the intake swirl A in the combustion chamber 4 can be effectively separated from the side wall surface 4a of the chamber 4 by means of the depressions arranged in this manner.

It is to be understood that the number of depressions according to the foregoing embodiments may be suitably changed and/or that the number of depressions formed in the side wall surface 4a of the combustion chamber 4 may be made appropriately different from the number of fuel sprays 9 ejected from the jets 8a of the fuel injection nozzle 8.

Although the depressions 7 according to each of the foregoing embodiments are arranged in a line on the side wall surface 4a, for example, they may be replaced with ones arranged in two lines. In this case, depressions smaller than the depressions 7 of the foregoing embodiment are arranged above and below the ridge 6 such that the depressions overlap the surfaces 6b and 6d.

## Claims

1. A diesel engine having a combustion chamber (4) and including an intake passage (11) communicated with a cylinder (10) of the engine through an intake valve (12) and serving to generate in the cylinder (10) a swirl (A) which flows around an axis of the cylinder (10), an exhaust passage (13) communicated with the cylinder (10) through an exhaust valve (14), a piston (1) slidably disposed in the cylinder (10), and a fuel injection nozzle (8) provided in a cylinder head (20) of the engine so that a fuel is injected directly into the cylinder (10) and used to inject a fuel in association with the compression stroke of the piston (1), the combustion chamber (4) being of the reentrant-cavity type and including a piston cavity that is formed in the top portion of the piston (1) and having a shape such that a side wall surface (4a) of the piston cavity spreads from an open end toward the inner part of the piston (1),
- wherein the combustion chamber comprises a plurality of depressions (7) formed in the side wall surface (4a), an edge (7a) of the depression (7) on the side of a top surface (2) of the piston (1) being situated in the piston cavity, each depression (7) being formed on the downstream side of a fuel impact portion (6a) of the side wall surface (4a) with respect to the swirl (A), the fuel impact portion (6a) receiving a fuel spray (9) ejected from the fuel injection nozzle (8), and
- the fuel injection nozzle (8) is located in the cylinder head (20) so as to be situated in the central portion of the combustion chamber (4), and has a plurality of jets (8a) from which the fuel is ejected radially only toward a fuel impact portion (6a), respectively, of the side wall surface (4a) of the combustion chamber (4).

2. The diesel engine according to claim 1,
**characterized by** further comprising a ridge (6) formed on the fuel impact portion (6a) of the side wall surface (4a) and adapted to change the direction of reflection of the impacting fuel spray (9) in accordance with the relative position of the piston (1) in the direction of an axis (C) of the piston (1).

3. The diesel engine according to claim 2,
**characterized in that** the ridge (6) is situated substantially on the middle portion of the side wall surface (4a) in the direction of the axis (C) and extends covering the whole circumference of the combustion chamber (4) in a manner such that the depression (7) overlaps part of the ridge (6).

4. The diesel engine according to claim 1,
**characterized in that** a plurality of the depressions (7) are formed corresponding in number to the fuel sprays (9) ejected individually from the jets (8a).

5. The diesel engine according to any of claims 1 to 4,
**characterized in that** the depression (7) has a shape such that the depth thereof gradually decreases toward the downstream side of the swirl.

6. The diesel engine according to any of claims 1 to 5,
**characterized by** further comprising a conical projection (5) protruding from the bottom of the combustion chamber (4) and projecting toward the fuel injection nozzle (8).

## Patentansprüche

1. Dieselmotor, der eine Brennkammer (4) hat und folgendes aufweist:
einen Ansaugkanal (11), der mit einem Zylinder (10) des Motors durch ein Einlaßventil (12) in Verbindung steht und dazu dient, in dem Zylinder (10) einen Wirbel (A) zu erzeugen, der um eine Achse des Zylinders (10) herum strömt,
einen Auslaßkanal (13), der mit dem Zylinder (10) durch ein Auslaßventil (14) in Verbindung steht,
einen Kolben (1), der in dem Zylinder (10) gleitbar angeordnet ist, und
ein Kraftstoffeinspritzventil (8), das in einem Zylinderkopf (20) des Motors so vorgesehen ist, daß Kraftstoff direkt in den Zylinder (10) eingespritzt wird, und das dazu dient, Kraftstoff in Abhängigkeit von dem Verdichtungshub des Kolbens (1) einzuspritzen, wobei die Brennkammer (4) vom Typ mit einspringendem Hohlraum ist und
einen Kolbenhohlraum aufweist, der im oberen Bereich des Kolbens (1) ausgebildet ist und eine solche Gestalt hat, daß sich eine Seitenwandoberfläche (4a) des Kolbenhohlraums von einem offenen Ende zu dem inneren Teil des Kolbens (1) hin ausbreitet,
- wobei die Brennkammer eine Vielzahl von Vertiefungen (7) aufweist, die in der Seitenwandoberfläche (4a) ausgebildet sind, wobei sich ein Rand (7a) der Vertiefung (7) an der Seite einer oberen Oberfläche (2) des Kolbens (1) in dem Kolbenhohlraum befindet, wobei jede Vertiefung (7) an der Abstromseite eines Kraftstoffauftreffbereichs (6a) der Seitenwandoberfläche (4a) in bezug auf den Wirbel (A) ausgebildet ist und der Kraftstoffauftreffbereich (6a) einen Kraftstoffsprühnebel (9) erhält, der von dem Kraftstoffeinspritzventil (8) ausgestoßen wird, und
- wobei das Kraftstoffeinspritzventil (8) so in dem Zylinderkopf (20) angeordnet ist, daß es sich in dem zentralen Bereich der Brennkammer (4) befindet, und eine Vielzahl von Düsen (8a) hat, aus denen der Kraftstoff nur zu einem jeweiligen Kraftstoffauftreffbereich (6a) der Seitenwandoberfläche (4a) der Brennkammer (4) radial ausgestoßen wird.

2. Dieselmotor nach Anspruch 1,
**dadurch gekennzeichnet,**
**daß** er ferner eine Rippe (6) aufweist, die an dem Kraftstoffauftreffbereich (6a) der Seitenwandoberfläche (4a) geformt und so ausgebildet ist, daß sie die Reflexionsrichtung des auftreffenden Kraftstoffsprühnebels (9) in Abhängigkeit von der relativen Position des Kolbens (1) in Richtung einer Achse (C) des Kolbens (1) ändert.

3. Dieselmotor nach Anspruch 2,
**dadurch gekennzeichnet,**
**daß** sich die Rippe (6) im wesentlichen an dem Mittelbereich der Seitenwandoberfläche (4a) in der Richtung der Achse (C) befindet und sich so erstreckt, daß sie den Gesamtumfang der Brennkammer (4) auf eine solche Weise bedeckt, daß die Vertiefung (7) einen Teil der Rippe (6) überlappt.

4. Dieselmotor nach Anspruch 1,
**dadurch gekennzeichnet,**
**daß** eine Vielzahl von Vertiefungen (7) ausgebildet ist, deren Anzahl den Kraftstoffsprühnebeln (9) entspricht, die einzeln aus den Düsen (8a) ausgestoßen werden.

5. Dieselmotor nach einem der Ansprüche 1 bis 4,
**dadurch gekennzeichnet,**
**daß** die Vertiefung (7) eine solche Gestalt hat, daß ihre Tiefe zu der Abstromseite des Wirbels hin allmählich abnimmt.

6. Dieselmotor nach einem der Ansprüche 1 bis 5,
**dadurch gekennzeichnet,**
**daß** er ferner einen konischen Vorsprung (5) aufweist, der vom Boden der Brennkammer (4) vorsteht und zu dem Kraftstoffeinspritzventil (8) hin ragt.

## Revendications

1. Moteur diesel comportant une chambre de combustion (4) et incluant un passage d'admission (11) en communication avec un cylindre (10) du moteur par l'intermédiaire d'une soupape d'admission (12) et servant à générer dans le cylindre (10) un tourbillon (A) qui circule autour d'un axe du cylindre (10), un passage d'échappement (13) en communication avec le cylindre (10) par l'intermédiaire d'une soupape d'échappement (14), un piston (1) disposé de façon coulissante dans le cylindre (10) et une buse d'injection de carburant (8) prévue dans une culasse (20) du moteur de sorte qu'un carburant soit injecté directement dans le cylindre (10) et utilisée pour injecter un carburant en liaison avec la course de compression du piston (1), la chambre de combustion (4) étant du type à cavité rentrante et incluant une cavité de piston qui est formée dans la partie supérieure du piston (1), et présentant une forme telle qu'une surface de paroi latérale (4a) de la cavité du piston s'étende d'une extrémité ouverte vers la partie interne du piston (1),
- dans lequel la chambre de combustion comprend une pluralité de creux (7) formés dans la surface de paroi latérale (4a), un bord (7a) du creux (7) sur le côté d'une surface supérieure (2) du piston (1) étant situé dans la cavité du piston, chaque creux (7) étant formé sur le côté aval d'une partie d'impact du carburant (6a) de la surface de paroi latérale (4a) par rapport au tourbillon (A), la partie d'impact du carburant (6a) recevant une pulvérisation de carburant (9) éjectée de la buse d'injection de carburant (8), et
- la buse d'injection de carburant (8) est située dans la culasse (20) de façon à être située dans la partie centrale de la chambre de combustion (4) et comporte une pluralité de jets (8a) à partir desquels le carburant est éjecté radialement seulement vers une partie d'impact de carburant (6a), respectivement, de la surface de paroi latérale (4a) de la chambre de combustion (4).

2. Moteur diesel selon la revendication 1,
**caractérisé en ce qu'**il comprend de plus une nervure (6) formée sur la partie d'impact de carburant (6a) de la surface de paroi latérale (4a) et adaptée pour changer la direction de réflexion de l'impact de la pulvérisation de carburant (9) conformément à la position relative du piston (1) dans la direction d'un axe (C) du piston (1).

3. Moteur diesel selon la revendication 2,
**caractérisé en ce que** la nervure (6) est située pratiquement au milieu de la surface de paroi latérale (4a) dans la direction de l'axe (C) et s'étend en recouvrant la circonférence totale de la chambre de combustion (4) d'une manière telle que le creux (7) chevauche une partie de la nervure (6).

4. Moteur diesel selon la revendication 1,
**caractérisé en ce qu'**une pluralité de creux (7) sont formés correspondant en nombre aux pulvérisations de carburant (9) éjectées individuellement des jets (8a).

5. Moteur diesel selon l'une quelconque des revendications 1 à 4, **caractérisé en ce que** le creux (7) présente une forme telle que la profondeur de celui-ci diminue progressivement vers le côté aval du tourbillon.

6. Moteur diesel selon l'une quelconque des revendications 1 à 5, **caractérisé en ce qu'**il comprend de plus une protubérance conique (5) dépassant du fond de la chambre de combustion (4) et se projetant vers la buse d'injection de carburant (8).
